# FASCICULE DE BREVET EUROPEEN

(11) **EP 2 263 118 B1**
(45) Date de publication et mention de la délivrance du brevet: **08.04.2020**
(21) Numéro de dépôt: 09720211.3
(22) Date de dépôt: 24.02.2009
(51) Int. Cl.: G02F 1/155

(54) **DISPOSITIF ELECTROCHROME COMPORTANT UN MAILLAGE**
ELEKTROCHROME VORRICHTUNG MIT ZAHNRADEINGRIFF
ELECTROCHROMIC DEVICE INCLUDING A MESHING

(30) Priorité: 04.03.2008 FR 0851399
(43) Date de publication de la demande: 22.12.2010
(73) Titulaire: Sage Electrochromics, Inc., Faribault, MN 55021 (US)
(72) Inventeur: VALENTIN, Emmanuel, F-94420 Le Plessis Trevisse (FR); GIRON, Jean-Christophe, B-4700 Eupen (BE); JOUSSE, Didier, F-95150 Taverny (FR); DUBRENAT, Samuel, F-75017 Paris (FR)
(74) Mandataire: Saint-Gobain Recherche
(86) Numéro de dépôt international: PCT/FR2009/050290
(87) Numéro de publication internationale: WO 2009/112751

(56) Documents cités:
- EP-A- 0 364 247
- EP-A- 0 618 477
- WO-A-00/57243
- WO-A2-2008/053109
- JP-A- 2003 057 685
- US-A- 5 293 546
- US-A- 5 903 382
- US-B1- 6 198 051
- US-B1- 6 785 036

## Description

La présente invention concerne un dispositif électrochrome à transparence contrôlée, notamment destiné à constituer un vitrage électrocommandable.

On connaît des vitrages qui possèdent une capacité de transmission de la lumière qui est réglable à partir d'un bon niveau de transparence jusqu'à une opacité la plus totale. De tels vitrages ont montré des applications dans les domaines techniques les plus divers.

On peut ainsi les utiliser en tant que vitrages d'une habitation afin, par exemple, d'ajuster le niveau d'ensoleillement d'un local en fonction des conditions extérieures et des souhaits des utilisateurs. On peut également les utiliser en tant que volets d'isolation pour préserver l'intimité des habitants d'un local soit vis-à-vis de l'extérieur, soit vis-à-vis de pièces contigües.

On peut également, dans le domaine automobile, faire appel à de tels dispositifs pour, par exemple, régler le niveau de transparence du pare-brise et/ou des vitres latérales ou du vitrage de toit d'une voiture, ainsi que sur certains accessoires de celle-ci, tels que notamment les rétroviseurs, afin de contrôler le flux de la lumière réfléchie vers le conducteur et éviter l'éblouissement de ce dernier. On peut bien entendu les utiliser dans d'autres domaines tels que notamment le domaine aéronautique pour contrôler par exemple la transparence des hublots des aéronefs.

On sait que les dispositifs électrochromes comportent une couche d'un matériau électrochrome en mesure d'insérer réversiblement et simultanément des ions et des électrons, dont les états d'oxydation qui correspondent aux états insérés et désinsérés sont d'une coloration distincte lorsqu'ils sont soumis à une alimentation électrique appropriée; l'un de ces états présentant une transmission lumineuse plus élevée que l'autre. Le matériau électrochrome est généralement à base d'oxyde de tungstène et doit être mis en contact avec une source d'électrons, telle que par exemple une couche électroconductrice transparente, et d'une source d'ions (des cations ou des anions) telle qu'un électrolyte conducteur ionique. On sait qu'une contre-électrode, en mesure également d'insérer de façon réversible des cations, doit être associée à la couche de matériau électrochrome, symétriquement par rapport à celle-ci, de sorte que, macroscopiquement, l'électrolyte apparaît comme un simple médium des ions. La contre-électrode doit être constituée d'une couche neutre en coloration ou, du moins, transparente ou peu colorée quand la couche électrochrome est à l'état coloré.

L'oxyde de tungstène étant un matériau électrochrome cathodique, c'est-à-dire que son état coloré correspond à l'état le plus réduit, un matériau électrochrome anodique à base d'oxyde de nickel ou d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline) ou le bleu de prusse.

On peut ranger actuellement les systèmes électrochromes en deux catégories en fonction de l'électrolyte utilisé.

Dans la première catégorie l'électrolyte peut ainsi se présenter sous la forme d'un polymère ou d'un gel, tel que par exemple un polymère à conduction protonique, tel que ceux décrits dans les brevets européens EP 0 253 713, et EP 0 670 346 ou un polymère à conduction d'ions lithium, tel que ceux décrits dans les brevets EP 0 382 623, EP 0 518 754 ou EP 0 532 408.

Dans la seconde catégorie, l'électrolyte peut également être constitué d'une couche minérale formant un conducteur ionique qui est isolé électriquement. Ces systèmes électrochromes sont alors désignés comme étant « tout solide ». On pourra se référer aux brevets européens EP 0 867 752 et EP 0 831 360.

On connaît d'autres types de systèmes électrochrome, tels que notamment les systèmes électrochromes dits « tout polymère », dans lesquels deux couches électroconductrices sont disposées de part et d'autre d'un empilement comprenant un polymère à coloration cathodique, un polymère isolant électronique conducteur ionique (de H⁺ ou Li⁺ tout particulièrement) et enfin un polymère à coloration anodique (tel que la polyaniline ou le polypyrrole).

On connaît enfin des systèmes dits « actifs » au sens de l'invention qui combinent des matériaux viologènes et des matériaux électrochromes par exemple présentant la séquence électrode conductrice/couche minérale ou polymère à propriétés électrochromes/couches (liquide, gel, polymère) à propriétés viologènes/électrode conductrice.

Ces systèmes à matériaux d'insertion réversibles sont particulièrement intéressants en ce qu'ils permettent de moduler l'absorption dans un domaine de longueurs d'onde plus large que les systèmes viologènes : ils peuvent absorber de manière variable non seulement dans le visible, mais également, notamment dans l'infrarouge, ce qui peut leur conférer un rôle optique et/ou thermique efficace.

Ces différents systèmes comportent deux couches électroconductrices qui enserrent une ou plusieurs couches électrochimiquement actives. Or, lorsque l'on crée une différence de potentiel entre ces deux couches électroconductrices, on contrôle, par la valeur de cette différence de potentiel, l'état de transmission/absorption du système, autrement dit le niveau de transparence de celui-ci.

Lorsque le système constitue un vitrage que l'on souhaite « électrocommandable » on privilégie bien entendu la transparence pour ces couches électroconductrices, si bien qu'elles doivent être réalisées dans des matériaux à la fois conducteurs du courant électrique et transparents, et ceci dans des gammes d'épaisseur que l'on rencontre habituellement dans le domaine des couches minces.

On fait appel habituellement à un matériau d'oxyde métallique dopé tel que l'oxyde d'étain dopé au fluor (SnO2 :F) ou l'oxyde d'indium dopé à l'étain (ITO) que l'on peut déposer sur différents substrats à chaud, notamment par pyrolyse sur du verre, comme la technique dite CVD, ou à froid notamment par des techniques sous vide de pulvérisation cathodique.

On a cependant constaté que, dans les épaisseurs où elles restent transparentes, les couches à base de ces matériaux ne donnent pas entière satisfaction, dans la mesure où elles ne sont pas suffisamment conductrices du courant électrique, si bien que lorsque l'on applique entre leurs bornes la tension électrique appropriée pour provoquer la modification de changement d'état nécessaire à une modification de leur transparence, elles augmentent le temps de réponse du système, ou temps de commutation.

Plus précisément, dans le cas par exemple où les deux couches électroconductrices sont constituées d'oxyde d'indium dopé à l'étain (ITO), la résistivité de la couche de base, ou couche inférieure, qui est de l'ordre de 3 à 5 Ω/carré passe à 60-70 Ω/carré pour la couche supérieure en raison de sa plus faible épaisseur. On sait en effet que si la couche de base a une épaisseur de l'ordre de 500 nm, la couche supérieure quant à elle n'a qu'une épaisseur de l'ordre de 100 nm et ceci pour des raisons essentiellement liées à la contrainte mécanique générée dans l'empilement.

D'une manière plus générale, les électrodes transparentes conductrices à base d'oxyde, comme celles en ITO, bien que conductrices n'atteignent pas des niveaux de conductivité électronique comparables à ceux obtenus avec des matériaux métalliques, même en augmentant l'épaisseur de la couche. On remarquera que pour le cas spécifique de l'ITO, son coût matière étant tel aujourd'hui, qu'au contraire on recherchera à minimiser l'épaisseur de la couche déposée. Cette différence de résistivité entre les couches inférieure et supérieure est à l'origine du ralentissement du temps de commutation du dispositif, c'est-à-dire du temps nécessaire pour que le système passe de son état le plus transparent à son état le plus opaque. Un tel ralentissement contribue de plus à la formation d'un phénomène de « halo », c'est-à-dire au fait, qu'en périphérie du système, soit dans les zones proches des arrivées de courant, la variation de transparence est quasi immédiate alors qu'au centre celle-ci se produit de façon progressive.

On comprend que, dans la plupart des applications et notamment dans le secteur des vitrages d'habitation et dans celui de l'automobile, de tels défauts sont très difficilement acceptables par l'utilisateur, ce dernier souhaitant un changement aussi rapide et aussi régulier que possible.

Pour pallier un tel inconvénient on a proposé, dans la demande WO 00/57243, d'augmenter la conductivité électrique de la couche supérieure conductrice en adjoignant à celle-ci un réseau de fils conducteurs écartés entre eux d'une distance de l'ordre de 1 à 3 mm.

Pour des raisons techniques de maintien, ces réseaux de fils sont disposés sur une feuille support intercalaire à base de polymère thermoplastique, et notamment une feuille de polyuréthane, qui est feuilletée au contact de la couche électroconductrice supérieure. On ramène ainsi la résistivité de cette dernière à des valeurs de l'ordre de 0.05 Ω/carré à 0,5 Ω/carré et, ce faisant, on diminue le temps de commutation du système ainsi que le phénomène de halo précédemment mentionné.

On a cependant constaté qu'un tel système présentait plusieurs inconvénients.

De première part, lorsque le système se trouve dans son état de plus grande transparence, les fils se trouvent visibles à l'œil nu, d'autant que, dans certaines conditions d'éclairement, ils peuvent induire des réflexions parasites.

De seconde part, lorsque le système se trouve exposé à des températures élevées, ce qui est parfois le cas lorsqu'il est installé sur des automobiles exposées en plein soleil, les fils conducteurs ont tendance à s'enfoncer dans la feuille intercalaire si bien qu'ils perdent alors le contact avec la couche électroconductrice, et dès lors ils n'assurent plus leur fonction.

Enfin, le haut niveau de qualité de surface des fils qui est nécessaire pour éviter que ceux-ci ne blessent la couche électroconductrice avec laquelle ils sont en contact, introduit un paramètre supplémentaire qui est difficile à maîtriser techniquement, ce qui implique un surcoût de fabrication.

Il existe également le document JP2003057685 décrivant un dispositif électrochrome, à transparence contrôlée, notamment de type électrocommandable, comportant, entre un substrat porteur transparent et un contre-substrat, au moins un empilement de couches fonctionnelles dont les couches extrêmes comportent des couches électroconductrices, la conductivité d'au moins une couche électroconductrice non en contact avec le substrat porteur étant renforcée par un réseau d'éléments conducteurs en contact avec celle-ci, ledit réseau comprenant des bandes parallèles. Le document WO2008/053109 décrit un dispositif électrochrome comprenant un substrat de verre silico-sodo-calcique S1, une électrode inférieure 2, une électrode supérieure 4, un système électrochrome 3, et une feuille 7 de Polyuréthane permet de feuilleter le verre S1 à un autre verre S2 de mêmes caractéristiques que le verre S1. La feuille de Polyuréthane 7 peut être munie, au niveau de sa face en contact avec l'empilement actif 3, d'une grille 9 similaire à celle déposée sur le substrat, en tant qu'électrode inférieure 2.

La présente invention a pour but de remédier à ces divers inconvénients en proposant un dispositif permettant à la fois de rendre invisible à l'œil les éléments permettant d'augmenter la conductivité de la couche électroconductrice, d'empêcher ces éléments de perdre le contact avec cette dernière lorsque le système est soumis à des températures élevées, et d'éviter de blesser la couche électroconductrice, et ceci sans pour autant imposer aux-dits éléments des niveaux de qualité élevés.

La présente invention a ainsi pour objet un dispositif électrochrome, tel que défini dans la revendication 1.

De façon à préserver le maillage, notamment lors de sa mise en place, celui-ci sera maintenu par un support, notamment en un matériau polymère.

Dans un mode de mise en œuvre de l'invention le dit empilement de couches fonctionnelles comprend successivement , en allant du substrat porteur vers le contre-substrat, d'une couche électroconductrice, d'une première couche d'un matériau électrochrome, d'au moins une couche à fonction électrolytique, d'une seconde couche d'un matériau électrochrome et d'une couche électroconductrice à épaisseur réduite.

Dans un autre mode de mise en œuvre de l'invention le dispositif comprend deux empilements de couches fonctionnelles, tel que défini dans la revendication 4.

Le maillage comprendra de préférence des fils notamment tissés qui sont conducteurs au moins sur leur surface externe, et dont le diamètre est compris entre 10 et 30 µm et préférentiellement voisin de 20 µm.

Les fils pourront comporter une âme en un matériau leur conférant une élasticité en flexion, notamment formée d'un polymère, de préférence un polyester.

Cette âme pourra être recouverte d'un matériau conducteur du courant électrique, et notamment de cuivre. De façon à contribuer au masquage du maillage aux yeux de l'utilisateur, la surface externe des fils formant ce dernier comprendra un oxyde conducteur de couleur noire.

Dans la plupart des cas les fils formant le maillage seront disposés de façon telle que l'espace libre intermailles soit de forme carrée ou rectangulaire. Cependant, notamment afin d'éviter les phénomènes de diffraction, on pourra assurer la distribution des fils formant le maillage sous une forme ondulée, suivant deux directions préférentielles sécantes et notamment perpendiculaires. Plus précisément la forme ondulée pourra être constituée par une succession de quarts de cercle, les directions de courbure respectives de deux arcs successifs étant opposées. Préférentiellement les points de croisement des fils se situeront aux points d'inflexion de deux arcs successifs.

Préférentiellement la transparence du maillage sera comprise entre 70 et 90 % et sera préférentiellement de l'ordre de 80 %.

La présente invention permet, notamment lorsque l'âme formant le fil à partir duquel le maillage est constitué est faite d'un matériau de type polymère, de conférer au dispositif une souplesse lui permettant de prendre facilement une courbure et de préserver l'empilement des griffures et des perforations, et ceci sans créer de plis en formant une courbe régulière. Il est ainsi possible suivant l'invention de feuilleter la maille dans des vitrages bombés et réguliers de grandes tailles, de l'ordre de plusieurs m², ceci étant une conséquence du coefficient d'élongation du matériau constituant l'âme du fil qui est compris entre 20 et 25 %

Selon un autre aspect de l'invention, celle-ci vise un vitrage électrochrome, qui comporte le dispositif électrochimique tel que précédemment décrit, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

Selon encore un autre aspect de l'invention, celle-ci vise l'utilisation du vitrage précédent en tant que vitrage pour le bâtiment, vitrage pour l'automobile, vitrage de véhicules industriels ou de transport collectif, ferroviaire, maritime, aérien, agricole , engin de chantier, rétroviseurs, miroirs, Display et affichage, obturateur pour dispositifs d'acquisition d'images.

On décrira ci-après, à titre d'exemple non limitatif, une forme d'exécution de la présente invention, en référence au dessin annexé sur lequel :
La figure 1 est une vue en coupe schématique d'un dispositif électrochrome suivant l'invention,
La figure 2 est une vue détaillée d'un exemple de maillage utilisé dans le dispositif suivant l'invention,
La figure 3 est une vue en coupe transversale d'un exemple d'un fil utilisé dans le maillage mis en œuvre dans le dispositif suivant l'invention.
La figure 4 est une vue en coupe schématique d'un second exemple de mise en œuvre d'un dispositif électrochrome suivant l'invention,
La figure 5 est un second exemple de maillage utilisé dans le dispositif suivant l'invention,

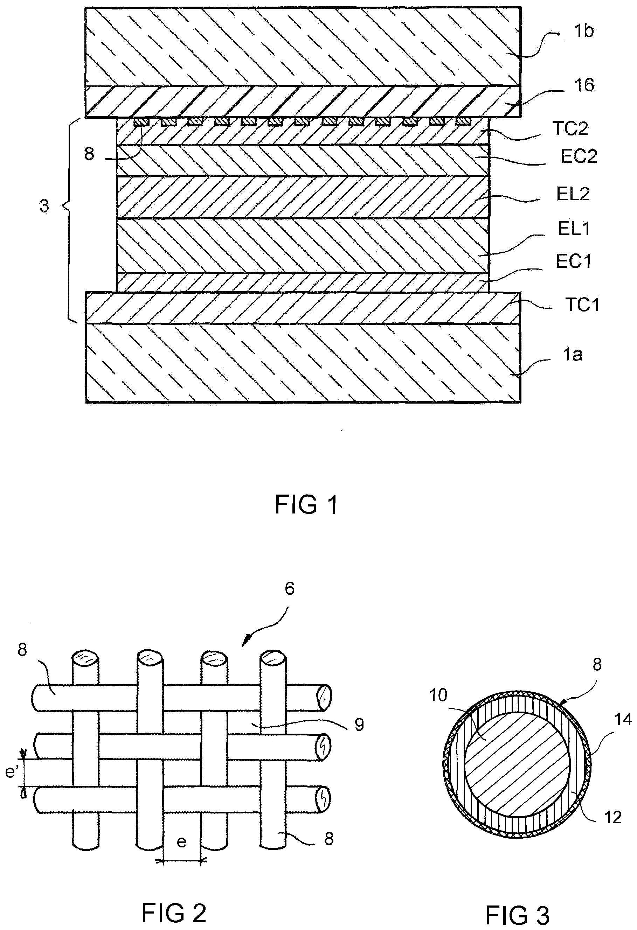

On a représenté sur la figure 1 un dispositif électrochrome, à transparence contrôlée suivant l'invention qui est notamment destiné à être appliqué à la réalisation d'un vitrage pour automobile, dont on souhaite pouvoir régler la transparence et contrôler la courbure.

De façon générale un tel dispositif est formé d'un empilement de couches fonctionnelles dit « tout solide » dont la structure est constituée d'un système fonctionnel électrochrome du type EC1/EL1/EL2/EC2 disposé entre deux couches électroconductrices TC1 et TC2, cet empilement de couches fonctionnelles étant disposé entre un substrat porteur la et un contre-substrat 1b. Dans un tel dispositif :
- les deux couches extrêmes TC1 et TC2 de cet empilement sont des couches électroconductrices de type métallique ou de type dit TCO (oxyde conducteur transparent) en In₂0₃ :Sn(ITO), SnO₂ :F, ZnO :Al. Elles peuvent également être un multi-couche du type TCO/métal/TCO, ce métal étant choisi notamment parmi l'argent, l'or, le platine, le cuivre, ou un multi-couche du type NiCr/métal/NiCr, le métal étant choisi notamment parmi l'argent, l'or, le platine, ou le cuivre,
- les deux couches EC1 et EC2 sont des couches électroactives électrochromes qui comportent au moins l'un des composés suivants utilisé seul ou en mélange:oxydes de tungstène, de niobium, d'étain, de bismuth, de vanadium, de nickel, d'iridium, d'antimoine, de tantale, et/ou un métal additionnel tel que le titane, le rhénium ou le cobalt,
- la couche EL est une couche à fonction électrolytique, qui peut en fait être formée de l'association d'au moins une couche à base d'un matériau choisi parmi les oxydes, de tantale, de tungstène, de molybdène, d'antimoine, de niobium, de chrome, de cobalt, de titane, d'étain, de nickel, de zinc éventuellement allié à de l'aluminium, de zirconium, d'aluminium, de silicium, éventuellement allié à de l'aluminium, du nitrure de silicium éventuellement allié à de l'aluminium ou du bore, du nitrure de bore, du nitrure d'aluminium, de l'oxyde de vanadium éventuellement allié à de l'aluminium, de l'oxyde d'étain et de zinc, au moins l'un de ces oxydes étant éventuellement hydrogéné ou nitruré. Dans l'exemple illustré en figure 1, la couche EL comporte deux couches à fonctions électrolytes EL1 et EL2.

Dans le présent mode de mise en œuvre de l'invention l'empilement 3 de couches fonctionnelles de type « tout solide » disposé entre le substrat de verre porteur la et le contre-substrat 1b comprend :
- une première couche électroconductrice TC1 constituée d'un oxyde d'étain dopé au fluor (SnO₂ :F) d'une épaisseur de l'ordre de 500 nm,
- une première couche EC1 d'un matériau électrochrome anodique en oxyde d'iridium hydraté IᵣOₓH_{y} d'une épaisseur de 70 nm,
- une première couche à fonction électrolytique EL1 d'oxyde de tungstène WO₃ d'une épaisseur de 100 nm,
- une seconde couche à fonction électrolytique EL2 de tantale hydraté, d'une épaisseur de 250nm, et
- une seconde couche EC2 d'un matériau électrochrome cathodique à base d'oxyde de tungstène HₓWO₃, d'une épaisseur de 380 nm,
- une seconde couche électroconductrice TC2 également constituée d'un oxyde d'étain dopé au fluor (SnO₂ :F). Son épaisseur, pour les raisons précédemment mentionnées, est moindre que celle de la première couche, à savoir de l'ordre de 120 nm.

Suivant l'invention la conductivité de la seconde couche électroconductrice TC2 de moindre épaisseur (et qui n'est pas en contact avec le substrat support la), est renforcée par un maillage conducteur 6 qui comporte n'importe quel métal conducteur et notamment de cuivre ou de tungstène.

Suivant l'invention le maillage sera préférentiellement constitué de fils conducteurs 8 tissés ensemble, ainsi que représenté sur la figure 2. Le diamètre de ces fils 8 sera compris entre environ 10 et 30 µm et préférentiellement de l'ordre de 20 µm. Les écartements e et e' des fils 8 entre eux sera compris entre 200 µm et 400 µm et préférentiellement voisin de 300 µm, si bien que l'espace 9, ou surface de l'espace libre intermailles, sera compris entre 0,04 et 0,16 mm² et sera préférentiellement de l'ordre de 0,09 mm².

Dans le tableau ci-après on donne pour une même valeur de diamètre de fil constituant différents maillages, les valeurs de TL et de flou obtenues.

| **diamètre du fil** | **fils/pouce²** | **ouverture (%)** | **V/Intercalaire /maillage/V** | **TL(%)** | **flou(%)** |
|---|---|---|---|---|---|
| | | | **pas de maillage** | 89,8 | 0,17 |
| 29 µm | 132x127 | 73 | **maillage A** | 63,2 | 1,3 |
| 29 µm | 95x95 | 79,5 | **maillage B** | 69 | 1,07 |
| 29 µm | 132x132 | 72 | **maillage C** | 64,5 | 2,48 |

Comme on peut le voir, il est préférable de diminuer la densité des fils par pouce² (maillage B) pour augmenter l'ouverture (rapport surface fil/surface totale) et donc en final, augmenter la valeur de transmission lumineuse et ainsi diminuer la valeur du flou.

Dans une variante particulièrement intéressante de l'invention les fils 8 constituant le maillage 6, ainsi que représenté sur la figure 3, pourront être constitués d'une âme 10 en un matériau polymère, et notamment en polyester, recouverte d'un matériau conducteur 12, tel que notamment du cuivre, éventuellement recouvert lui-même d'un oxyde métallique conducteur 14 de couleur noire.

Ce maillage 6 est préférentiellement déposé sur un intercalaire de feuilletage 16, par exemple en polyuréthane ou en PVB (poly vinyl butyral), et ce dernier est feuilleté au contact de la seconde couche électroconductrice TC2.

Selon une variante de réalisation, on pourra recouvrir l'électrode TC1, avant dépôt de l'empilement 3 de couches fonctionnelles, par un tissu métallique, comme celui décrit dans la demande appartenant à la société demanderesse déposée sous le numéro WO2008020141.

Néanmoins dans ce cas, il sera intéressant de prévoir un décalage angulaire des mailles formant ce tissu, d'un angle compris entre 15 à 60°, préférentiellement compris entre 30 à 50 °, entre le maillage 6 et ce tissu métallique, pour éviter des phénomènes de moirage.

Suivant la présente invention l'empilement 3 de couches fonctionnelles peut bien entendu avoir des configurations diverses, en fonction du résultat que le dispositif est destiné à fournir.

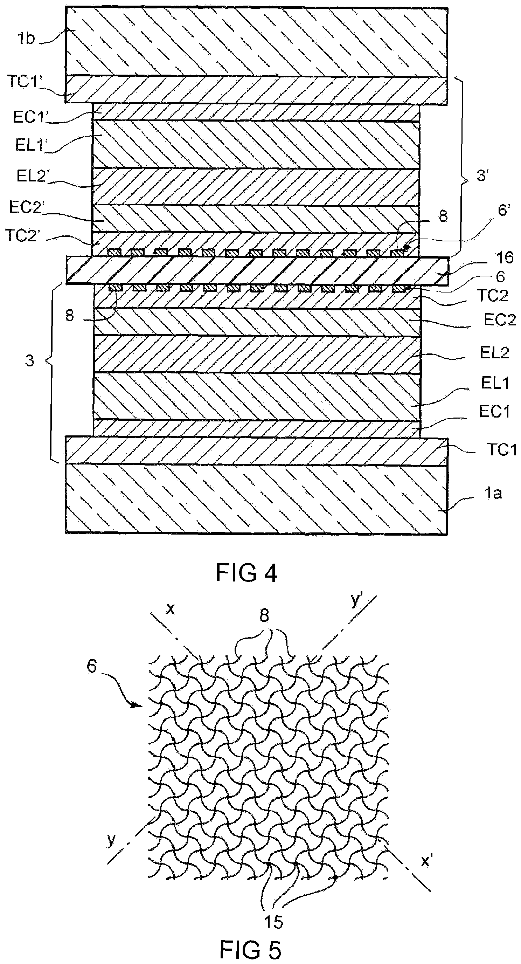

Ainsi, lorsque l'on souhaite renforcer l'opacité conférée par le dispositif, notamment pour occulter des intensités lumineuses importantes, on peut lui donner la configuration représentée sur la figure 4.

Sur celle-ci le dispositif électrochrome comprend ainsi un substrat porteur la et un contre-substrat 1b entre lesquels on dispose deux empilements de couches fonctionnelles 3 et 3'.

Le premier empilement 3 de couches fonctionnelles est du même type que celui décrit précédemment et comporte ainsi : une couche électroconductrice TC1, une première couche EC1 d'un matériau électrochrome anodique, deux couches à fonction électrolytique EL1 et EL2, une seconde couche EC2 d'un matériau électrochrome cathodique, et une couche électroconductrice TC2 de moindre épaisseur que la couche TC1. Suivant l'invention la couche électroconductrice TC2 de moindre épaisseur reçoit un maillage conducteur 6 supporté par un intercalaire 16.

Le second empilement 3' de couches fonctionnelles est disposé sur le premier, et la disposition de ses couches est inversée par rapport à celui-ci. Il comporte ainsi un maillage conducteur 6' également supporté par l'intercalaire 16, une couche électroconductrice TC2' de moindre épaisseur, une couche EC2 d'un matériau électrochrome cathodique, deux couches à fonction électrolytique EL1' et EL2', une couche EC1' d'un matériau électrochrome anodique, et une couche électroconductrice TC1'

Le maillage, afin notamment d'éviter les phénomènes de diffraction, peut être constitué de fils 8 formant une ondulation, ainsi que représenté sur la figure 5, et qui se distribuent suivant deux directions préférentielles xx' et yy' qui sont sécantes. Dans le présent exemple de mise en œuvre ces deux directions préférentielles sont perpendiculaires.

Les ondulations pourront avantageusement être constituées d'une succession de fractions de cercles, notamment de quarts de cercles, de façon que deux fractions de cercle successives aient leur concavité orientée de façon opposée.

Préférentiellement les points de croisement 15 de ces fils se situeront aux points d'inflexion de deux arcs successifs.

On a constaté un certains nombre d'améliorations d'un tel dispositif électrochrome par rapport à ceux de l'état antérieur de la technique dans lesquels la conductivité de la couche électroconductrice de moindre épaisseur était déjà améliorée par un réseau de fils conducteurs.

On a ainsi constaté tout d'abord que la résistivité de cette dernière couche était ramenée d'une valeur de 60 à 70 Ω/carré à une valeur comprise entre 0.05 Ω/carré à 0,5 Ω/carré.

On a constaté, de plus, pour un observateur situé à une distance de l'ordre de un mètre du dispositif, que le maillage 6 était quasiment invisible à l'œil nu, et ne générait plus de réflexions parasites, et ceci même dans les cas d'éclairages réputés difficiles.

On a également constaté que la perte de contact du maillage 6 avec la couche électroconductrice lorsque le dispositif était exposé à des températures de l'ordre de 80 à 90°C était si faible qu'au bout de 2000 heures on n'a détecté aucune augmentation du temps de commutation, alors que dans la technique antérieure ce dernier pouvait augmenter dans un rapport de 5 à 10.

Par ailleurs, l'élasticité conférée par l'âme 10 des fils 8 formant le maillage 6 permet d'une part d'éviter les plis qui ne manquent pas de se former lorsque les fils sont réalisés en un matériau non élastique, tel que par exemple le cuivre et, d'autre part, de donner un galbe régulier et prononcé à l'ensemble, ce qui permet de réaliser des vitrages feuilletés de grande taille et à faible rayon de courbure, sans pour autant provoquer des détériorations de l'intercalaire de feuilletage 16 et de son maillage.

On a constaté enfin que le maillage conducteur permettait de constituer des vitrages formant un blindage électrostatique, ce qui se révèle particulièrement intéressant pour des applications dans certains domaines où il est essentiel de faire barrage à ce type de rayonnements, tels que le domaine aéronautique, par exemple pour constituer des hublots d'aéronefs.

## Revendications

1. Dispositif électrochrome, à transparence contrôlée, notamment de type électrocommandable, comportant, entre un substrat porteur transparent (1a) et un contre-substrat (1b), au moins un empilement (3) de couches fonctionnelles dont les couches extrêmes (TC1, ;TC1',) comportent des couches électroconductrices, la conductivité d'au moins une couche électroconductrice (TC2) non en contact avec le substrat porteur (1a) étant renforcée par un réseau d'éléments conducteurs (8) en contact avec celle-ci, le réseau comprenant un maillage (6) dont la surface de l'espace libre intermailles (9) est comprise entre sensiblement 0,04 mm² et 0,16 mm² et préférentiellement voisine de 0,09 mm², le maillage (6) étant maintenu par un intercalaire de feuilletage (16) en un matériau polymère,
**caractérisé en ce que** la couche conductrice électroconductrice (TC1) est recouverte d'un tissu métallique, les mailles formant ce tissu étant décalées angulairement d'un angle compris entre 15 à 60°, préférentiellement compris entre 30 à 50 °, par rapport au maillage (6).

2. Dispositif électrochrome à transparence contrôlée suivant la revendication 1 **caractérisé en ce que** le dit empilement (3) de couches fonctionnelles est successivement constitué, en allant du substrat porteur (1a) vers le contre-substrat (1b), d'une couche électroconductrice (TC1), d'une première couche d'un matériau électrochrome (EC1), d'au moins une couche à fonction électrolytique (EL1,EL2), d'une seconde couche d'un matériau électrochrome (EC2) et d'une couche électroconductrice à épaisseur réduite (TC2).

3. Dispositif électrochrome à transparence contrôlée suivant la revendication 1 ou 2 **caractérisé en ce que** l'empilement (3) de couches fonctionnelles reçoit un second empilement de couches fonctionnelles (3') dont la disposition des couches est inversée par rapport au premier et qui est successivement constitué d'une couche électroconductrice (TC2') à épaisseur réduite, d'une couche électrochrome (EC2), d'au moins une couche à fonction électrolytique (EL2',EL1'), d'une couche d'un matériau électrochrome (EC1') et d'une couche électroconductrice (TC1').

4. Dispositif électrochrome, à transparence contrôlée, notamment de type électrocommandable, comportant, entre un substrat porteur transparent (1a) et un contre-substrat (1b), **caractérisé en ce que** le dispositif comprend deux empilements (3,3') de couches fonctionnelles dont les couches extrêmes (TC1, TC2 ;TC1', TC2') comportent des couches électroconductrices, la conductivité des couches électroconductrices (TC2,TC2') non en contact avec le substrat porteur (1a) de chaque empilement étant renforcée par un réseau d'éléments conducteurs (8) en contact avec celle-ci, le réseau comprenant un maillage (6,6') dont la surface de l'espace libre intermailles (9) est comprise entre sensiblement 0,04 mm² et 0,16 mm² et préférentiellement voisine de 0,09 mm², le maillage (6,6') étant maintenu par un intercalaire de feuilletage (16) en un matériau polymère, le maillage de ces deux réseaux (6,6') étant décalées angulairement entre eux d'un angle compris entre 15 à 60°, préférentiellement compris entre 30 à 50°..

5. Dispositif électrochrome à transparence contrôlée suivant la revendication 4 **caractérisé en ce qu'**un premier empilement (3) de couches fonctionnelles est successivement constitué, en allant du substrat porteur (1a) vers le contre-substrat (1b), d'une couche électroconductrice (TC1), d'une première couche d'un matériau électrochrome (EC1), d'au moins une couche à fonction électrolytique (EL1,EL2), d'une seconde couche d'un matériau électrochrome (EC2) et d'une couche électroconductrice à épaisseur réduite (TC2).

6. Dispositif électrochrome à transparence contrôlée suivant la revendication 5 **caractérisé en ce qu'**un second empilement de couches fonctionnelles (3') dont la disposition des couches est inversée par rapport au premier et qui est successivement constitué d'une couche électroconductrice (TC2') à épaisseur réduite, d'une couche électrochrome (EC2), d'au moins une couche à fonction électrolytique (EL2',EL1'), d'une couche d'un matériau électrochrome (EC1') et d'une couche électroconductrice (TC1').

7. Dispositif électrochrome à transparence contrôlée suivant l'une des revendications précédentes **caractérisé en ce que** le maillage (6,6') comprend des fils (8) qui sont conducteurs au moins sur leur surface externe, et dont le diamètre est compris entre 10 et 30 µm et préférentiellement voisin de 20 µm.

8. Dispositif électrochrome à transparence contrôlée suivant la revendication 7 **caractérisé en ce que** les fils (8) comportent une âme (10) en un matériau leur conférant une élasticité en flexion, notamment formé d'un polymère et plus particulièrement d'un polyester.

9. Dispositif électrochrome à transparence contrôlée suivant la revendication 8 **caractérisé en ce que** l'âme (10) est recouverte d'un matériau conducteur du courant électrique, et notamment de cuivre.

10. Dispositif électrochrome à transparence contrôlée suivant l'une des revendications 4 à 9 **caractérisé en ce que** la surface externe des fils (8) est à base d'un oxyde conducteur (14) de couleur noire.

11. Dispositif électrochrome à transparence contrôlée suivant l'une des revendications 4 à 10, **caractérisé en ce que** les fils (8) formant le maillage (6,6') sont disposés de façon telle que l'espace libre intermailles (9) est de forme carrée ou rectangulaire.

12. Dispositif électrochrome à transparence contrôlée suivant l'une des revendications 4 à 10, **caractérisé en ce que** les fils (8) se distribuent, sous une forme ondulée, suivant deux directions préférentielles (xx',yy') sécantes.

13. Dispositif électrochrome à transparence contrôlée suivant la revendication 11, **caractérisé en ce que** les deux directions préférentielles (xx', yy') sont perpendiculaires.

14. Dispositif électrochrome à transparence contrôlée suivant l'une des revendications 12 ou 13, **caractérisé en ce que** la forme ondulée comporte une succession de quarts de cercle, les directions de courbure respectives de deux arcs successifs étant opposées.

15. Dispositif électrochrome à transparence contrôlée suivant l'une des revendications 12 à 14, **caractérisé en ce que** les points de croisement (15) des fils (8) se situent aux points d'inflexion de deux arcs successifs.

16. Dispositif électrochrome à transparence contrôlée suivant l'une des revendications précédentes, **caractérisé en ce que** la transparence du maillage (6,6') est comprise entre 70 et 90 % et préférentiellement de l'ordre de 80 %.

17. Vitrage électrochrome, **caractérisé en ce qu'**il comporte le dispositif électrochimique selon l'une des revendications précédentes, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

18. Utilisation du vitrage selon la revendication 17 en tant que vitrage pour le bâtiment, vitrage pour l'automobile, vitrage de véhicules industriels ou de transport collectif, ferroviaire, maritime, aérien, agricole , engin de chantier, rétroviseurs, miroirs, Display et affichage, obturateur pour dispositifs d'acquisition d'images.

## Patentansprüche

1. Elektrochrome Vorrichtung mit gesteuerter Transparenz, insbesondere vom elektrisch steuerbaren Typ, die zwischen einem transparenten Trägersubstrat (1a) und einem Gegensubstrat (1b) mindestens eine Stapelung (3) von Funktionsschichten umfasst, deren Endschichten (TC1, TC1') elektrisch leitende Schichten umfassen, wobei die Leitfähigkeit mindestens einer elektrisch leitenden Schicht (TC2), die nicht mit dem Trägersubstrat (1a) in Kontakt steht, durch ein Netzwerk leitender Elemente (8), die mit ihr in Kontakt stehen, verstärkt ist, wobei das Netzwerk ein Geflecht (6) umfasst, dessen Oberfläche des freien Raums zwischen Maschen (9) zwischen im Wesentlichen 0,04 mm² und 0,16 mm² und vorzugsweise nahe 0,09 mm² liegt, wobei das Geflecht (6) von einer Laminierungszwischenlage (16) aus einem Polymermaterial gehalten wird, **dadurch gekennzeichnet, dass** die elektrisch leitende leitende Schicht (TC1) mit einem Metallgewebe bedeckt ist, wobei die Maschen, die dieses Gewebe bilden, um einen Winkel zwischen 15 und 60°, vorzugsweise zwischen 30 und 50°, bezogen auf das Geflecht (6), winkelversetzt sind.

2. Elektrochrome Vorrichtung mit gesteuerter Transparenz nach Anspruch 1, **dadurch gekennzeichnet, dass** die Stapelung (3) von Funktionsschichten sukzessive, von dem Trägersubstrat (1a) zu dem Gegensubstrat (1b), aus einer elektrisch leitenden Schicht (TC1), einer ersten Schicht aus einem elektrochromen Material (EC1), mindestens einer Schicht mit elektrolytischer Funktion (EL1, EL2), einer zweiten Schicht aus einem elektrochromen Material (EC2) und einer elektrisch leitenden Schicht mit reduzierter Stärke (TC2) besteht.

3. Elektrochrome Vorrichtung mit gesteuerter Transparenz nach Anspruch 1 oder 2, **dadurch gekennzeichnet, dass** die Stapelung (3) von Funktionsschichten eine zweite Stapelung von Funktionsschichten (3') empfängt, deren Anordnung der Schichten in Bezug auf die erste umgekehrt ist und die sukzessive aus einer elektrisch leitenden Schicht (TC2') mit reduzierter Stärke, einer elektrochromen Schicht (EC2), mindestens einer Schicht mit elektrolytischer Funktion (EL2', EL1'), einer Schicht aus einem elektrochromen Material (EC1') und einer elektrisch leitenden Schicht (TC1') besteht.

4. Elektrochrome Vorrichtung mit gesteuerter Transparenz, insbesondere vom elektrisch steuerbaren Typ, die zwischen einem transparenten Trägersubstrat (1a) und einem Gegensubstrat (1b) umfasst, **dadurch gekennzeichnet, dass** die Vorrichtung zwei Stapelungen (3,3') von Funktionsschichten umfasst, deren Endschichten (TC1, TC2, TC1', TC2') elektrisch leitende Schichten umfassen, wobei die Leitfähigkeit der elektrisch leitenden Schichten (TC2, TC2'), die nicht mit dem Trägersubstrat (1a) jeder Stapelung in Kontakt stehen, durch ein Netzwerk leitender Elemente (8) in Kontakt mit dieser verstärkt sind, wobei das Netzwerk ein Geflecht (6, 6') umfasst, dessen Oberfläche des freien Raums zwischen Maschen (9) zwischen im Wesentlichen 0,04 mm² und 0,16 mm² und vorzugsweise nahe 0,09 mm², liegt, wobei das Geflecht (6,6') von einer Laminierungszwischenlage (16) aus einem Polymermaterial gehalten wird, wobei das Geflecht dieser beiden Netzwerke (6,6') um einen Winkel zwischen 15 und 60°, vorzugsweise zwischen 30 und 50°, winkelversetzt ist.

5. Elektrochrome Vorrichtung mit gesteuerter Transparenz nach Anspruch 4, **dadurch gekennzeichnet, dass** eine erste Stapelung (3) von Funktionsschichten sukzessive, von dem Trägersubstrat (1a) zu dem Gegensubstrat (1b), aus einer elektrisch leitenden Schicht (TC1), einer ersten Schicht aus einem elektrochromen Material (EC1), mindestens einer Schicht mit elektrolytischer Funktion (EL1, EL2), einer zweiten Schicht aus einem elektrochromen Material (EC2) und einer elektrisch leitenden Schicht mit reduzierter Stärke (TC2) besteht.

6. Elektrochrome Vorrichtung mit gesteuerter Transparenz nach Anspruch 5, **dadurch gekennzeichnet, dass** eine zweite Stapelung von Funktionsschichten (3'), deren Anordnung der Schichten in Bezug auf die erste umgekehrt ist, sukzessive aus einer elektrisch leitenden Schicht (TC2') mit reduzierter Stärke, einer elektrochromen Schicht (EC2), mindestens einer Schicht mit elektrolytischer Funktion (EL2', EL1'), einer Schicht aus einem elektrochromen Material (EC1') und einer elektrisch leitenden Schicht (TC1') besteht.

7. Elektrochrome Vorrichtung mit gesteuerter Transparenz nach einem der vorstehenden Ansprüche, **dadurch gekennzeichnet, dass** das Geflecht (6, 6') Drähte (8) umfasst, die zumindest auf ihrer Außenfläche leitend sind und deren Durchmesser zwischen 10 und 30 µm und vorzugsweise nahe 20 µm liegt.

8. Elektrochrome Vorrichtung mit gesteuerter Transparenz nach Anspruch 7, **dadurch gekennzeichnet, dass** die Drähte (8) eine Seele (10) aus einem Material umfassen, das ihnen Biegeelastizität verleiht, das insbesondere aus einem Polymer und genauer aus einem Polyester gebildet ist.

9. Elektrochrome Vorrichtung mit gesteuerter Transparenz nach Anspruch 8, **dadurch gekennzeichnet, dass** die Seele (10) mit einem leitenden Material des elektrischen Stroms und insbesondere mit Kupfer bedeckt ist.

10. Elektrochrome Vorrichtung mit gesteuerter Transparenz nach einem der Ansprüche 4 bis 9, **dadurch gekennzeichnet, dass** die Außenfläche der Drähte (8) auf einem leitenden Oxid (14) mit schwarzer Farbe basiert.

11. Elektrochrome Vorrichtung mit gesteuerter Transparenz nach einem der Ansprüche 4 bis 10, **dadurch gekennzeichnet, dass** die Drähte (8), die das Geflecht (6, 6') bilden, derart angeordnet sind, dass der freie Raum zwischen Machen (9) quadratische oder rechteckige Form aufweist.

12. Elektrochrome Vorrichtung mit gesteuerter Transparenz nach einem der Ansprüche 4 bis 10, **dadurch gekennzeichnet, dass** sich die Drähte (8) in einer gewellten Form in zwei schneidenden Vorzugsrichtungen (xx', yy') verteilen.

13. Elektrochrome Vorrichtung mit gesteuerter Transparenz nach Anspruch 11, **dadurch gekennzeichnet, dass** die zwei Vorzugsrichtungen (xx', yy') senkrecht sind.

14. Elektrochrome Vorrichtung mit gesteuerter Transparenz nach einem der Ansprüche 12 oder 13, **dadurch gekennzeichnet, dass** die gewellte Form eine Abfolge von Viertelkreisen umfasst, wobei die jeweiligen Krümmungsrichtungen zweier sukzessiver Bögen entgegengesetzt sind.

15. Elektrochrome Vorrichtung mit gesteuerter Transparenz nach einem der Ansprüche 12 bis 14, **dadurch gekennzeichnet, dass** sich die Kreuzungspunkte (15) der Drähte (8) an den Wendepunkten zweier sukzessiver Bögen befinden.

16. Elektrochrome Vorrichtung mit gesteuerter Transparenz nach einem der vorstehenden Ansprüche, **dadurch gekennzeichnet, dass** die Transparenz des Geflechts (6,6') zwischen 70 und 90 % und vorzugsweise in der Größenordnung von 80 % liegt.

17. Elektrochrome Verglasung, **dadurch gekennzeichnet, dass** sie die elektrochemische Vorrichtung nach einem der vorstehenden Ansprüche umfasst, die insbesondere eine variable Licht- und/oder Energiedurchlässigkeit und/oder -reflexion aufweist, mit dem oder zumindest einem Teil des/der transparenten oder teilweise transparenten Substrat/s/e aus Kunststoffmaterial, vorzugsweise in Mehrfach- und/oder Verbundverglasung oder in Doppelverglasung montiert.

18. Verwendung der Verglasung nach Anspruch 17 als Verglasung für Bauwesen, Verglasung für Automobile, Verglasung von Industriefahrzeugen oder öffentlichen Verkehrsmitteln, Eisenbahnen, See-, Luft-, landwirtschaftlichen Fahrzeugen, Baumaschinen, Rückspiegeln, Spiegeln, Displays und Anzeigen, Verschlüssen für Bildaufnahmevorrichtungen.

## Claims

1. An electrochromic device, with controlled transparency, in particular of the electrically controllable type, comprising between a transparent carrier substrate (1a) and a counter-substrate (1b), at least one stack (3) of functional layers, the outermost layers of which (TC1 ; TC1') comprise electroconductive layers, the conductivity of at least one electroconductive layer (TC2) not in contact with the carrier substrate (1a) being reinforced by a network of conductive elements (8) in contact with this layer, the network comprising a mesh (6), for which the area of the intermesh free space (9) is substantially between 0.04 mm² and 0.16 mm² and preferably in the vicinity of 0.09 mm², the mesh (6) being held by a support (16) made of a polymer material,
**characterized in that** the electroconductive conductive layer (TC1) is covered with a metallic fabric, the links forming this fabric being offset angularly by an angle between 15 to 60°, preferably between 30 to 50° relative to the mesh (6).

2. The electrochromic device with controlled transparency as claimed in claim 1, **characterized in that** said stack (3) of functional layers is successively composed, going from the carrier substrate (1a) toward the counter-substrate (1b), of an electroconductive layer (TC1), of a first layer of an electrochromic material (EC1), of at least one layer having an electrolytic function (EL1, EL2), of a second layer of an electrochromic material (EC2) and of an electroconductive layer having a reduced thickness (TC2) .

3. The electrochromic device with controlled transparency as claimed in claim 1 or 2, **characterized in that** the stack (3) of functional layers receives a second stack of functional layers (3') for which the arrangement of the layers is reversed relative to the first stack and which is successively composed of an electroconductive layer (TC2') having reduced thickness, of an electrochromic layer (EC2), of at least one layer having an electrolytic function (EL2', EL1'), of a layer of an electrochromic material (EC1') and of an electroconductive layer (TC1').

4. An electrochromic device, with controlled transparency, in particular of the electrically controllable type, comprising between a transparent carrier substrate (1a) and a counter-substrate (1b), **characterized in that** the device comprises two stacks (3,3') of functional layers, the outermost layers of which (TC1,TC1'; TC2,TC2') comprise electroconductive layers, the conductivity of the electroconductive layers (TC2, TC2') not in contact with the carrier substrate (1a) being reinforced by a network of conductive elements (8) in contact with this layer, the network comprising a mesh (6,6'), for which the area of the intermesh free space (9) is substantially between 0.04 mm2 and 0.16 mm2 and preferably in the vicinity of 0.09 mm2, the mesh (6) being held by a support (16) made of a polymer material, the links forming these two meshes (6,6') being offset angularly by an angle between 15 to 60°, preferably between 30 to 50°.

5. An electrochromic device, with controlled transparency, according to claim 4, **characterized in that** the first stack (3) of functional layers is successively composed, going from the carrier substrate (1a) toward the counter-substrate (1b), of an electroconductive layer (TC1), of a first layer of an electrochromic material (EC1), of at least one layer having an electrolytic function (EL1, EL2), of a second layer of an electrochromic material (EC2) and of an electroconductive layer having a reduced thickness (TC2) .

6. An electrochromic device, with controlled transparency, according to claim 5, **characterized in that** the second stack (3'), whose layout of functional layers is reversed compared to the first stack (3), is successively composed, going from the carrier substrate (1a) toward the counter-substrate (1b), of an electroconductive layer (TC2') having a reduced thickness, of an electrochromic material (EC2), of at least one layer having an electrolytic function (EL1', EL2'), of a layer of an electrochromic material (EC1') and of an electroconductive layer (TC1').

7. The electrochromic device with controlled transparency as claimed in one of the preceding claims, **characterized in that** the mesh (6, 6') comprises wires (8) that are conductive at least over their outer surface, and the diameter of which is between 10 and 30 µm and preferably in the vicinity of 20 µm.

8. The electrochromic device with controlled transparency as claimed in claim 7, **characterized in that** the wires (8) comprise a core (10) made of a material that gives them a flexural elasticity, especially formed from a polymer and more particularly from a polyester.

9. The electrochromic device with controlled transparency as claimed in claim 8, **characterized in that** the core (10) is covered with a material that conducts electric current, and especially with copper.

10. The electrochromic device with controlled transparency as claimed in one of claims 4 to 9, **characterized in that** the outer surface of the wires (8) is based on a black-colored conductive oxide (14).

11. The electrochromic device with controlled transparency as claimed in one of claims 4 to 10, **characterized in that** the wires (8) forming the mesh (6, 6') are positioned so that the intermesh free space (9) is of square or rectangular shape.

12. The electrochromic device with controlled transparency as claimed in one of claims 4 to 10, **characterized in that** the wires (8) are distributed, in a wavy shape, along two preferably secant directions (xx', yy').

13. The electrochromic device with controlled transparency as claimed in claim 11, **characterized in that** the two preferred directions (xx', yy') are perpendicular.

14. The electrochromic device with controlled transparency as claimed in either of claims 12 or 13, **characterized in that** the wavy shape comprises a succession of quarter circles, the respective directions of curvature of two successive arcs being opposite.

15. The electrochromic device with controlled transparency as claimed in one of claims 12 to 14, **characterized in that** the points of intersection (15) of the wires (8) are located at the points of inflection of two successive arcs.

16. The electrochromic device with controlled transparency as claimed in one of the preceding claims, **characterized in that** the transparency of the mesh (6, 6') is between 70 and 90% and preferably around 80%.

17. An electrochromic glazing unit, **characterized in that** it comprises the electrochemical device as claimed in one of the preceding claims, having in particular a variable light and/or energy transmission and/or reflection, with the substrate or at least one part of the substrates which is (are) transparent or partially transparent, made of a plastic material, preferably mounted as multiple and/or laminated glazing, or as double glazing.

18. The use of the glazing unit as claimed in claim 17, as architectural glazing, automotive glazing, windows for industrial or public transport, rail, sea, air, agricultural or work site vehicles, rearview mirrors, mirrors, displays and screens, or shutters for image acquisition devices.
